# EUROPÄISCHE PATENTANMELDUNG

(11) **EP 4 700 351 A1**
(43) Veröffentlichungstag der Anmeldung: **25.02.2026**
(21) Anmeldenummer: 25196950.7
(22) Anmeldetag: 20.08.2025
(51) Int. Cl.: G01K 13/02, G01D 4/00

(54) **VERFAHREN ZUR BESTIMMUNG DER TEMPERATUR DES IN EINEM WASSERVERSORGUNGSNETZ VORHANDENEN WASSERS UND BESTIMMUNGSEINRICHTUNG ZUR BESTIMMUNG EINER SOLCHEN TEMPERATUR**

(30) Priorität: 20.08.2024 DE 102024123710; 02.09.2024 DE 102024125000
(71) Anmelder: Diehl Metering GmbH, 91522 Ansbach (DE)
(72) Erfinder: Eff, Ulrich, 91567 Herrieden (DE)
(74) Vertreter: Diehl Patentabteilung

(57) **Zusammenfassung**

Verfahren zur Bestimmung der Temperatur des in einem Wasserversorgungsnetz (1) vorhandenen Wassers, wobei das Wasserversorgungsnetz (1) über eine von außen in ein Gebäude führende Anschlussvorrichtung (3) mit einer in dem Gebäude angeordneten Verbrauchsstelle (2) verbunden ist, wobei die Anschlussvorrichtung (3) einen ebenfalls in dem Gebäude angeordneten Wasserzähler (4) aufweist, wobei mittels eines Mengenerfassungsmittels (17) des Wasserzählers (4) wenigstens eine Mengeninformation (15) erfasst wird, die eine Menge des über die Anschlussvorrichtung (3) zu der Verbrauchsstelle (2) gelangenden Wassers betrifft, wobei mittels eines Temperaturerfassungsmittels (18) wenigstens eine Temperaturinformation (16) erfasst wird, die eine Temperatur des sich im Bereich des Wasserzählers (4) befindenden Wassers betrifft, wobei die Erfüllung einer Speicherbedingung überprüft wird, die erfüllt oder nur dann erfüllbar ist, wenn sich aus der Mengeninformation (15) oder wenigstens einer der Mengeninformationen (15) ergibt, dass eine Temperatur des sich im Bereich des Wasserzählers (4) befindenden Wassers der Temperatur des in dem Wasserversorgungsnetz (1) vorhandenen Wassers entspricht, wobei bei der Erfüllung der Speicherbedingung die wenigstens eine, aktuell erfasste Temperaturinformation (16) auf einem Datenspeicher (20) abgespeichert und/oder zur Bestimmung der Temperatur des in dem Wasserversorgungsnetz (1) vorhandenen Wassers verwendet wird.

## Beschreibung

Die vorliegende Erfindung betrifft ein Verfahren zur Bestimmung der Temperatur des in einem Wasserversorgungsnetz vorhandenen Wassers, wobei das Wasserversorgungsnetz über eine von außen in ein Gebäude führende Anschlussvorrichtung mit einer in dem Gebäude angeordneten Verbrauchsstelle verbunden ist, wobei die Anschlussvorrichtung einen ebenfalls in dem Gebäude angeordneten Wasserzähler aufweist.

Typischerweise ist für das in einem Wasserversorgungsnetz vorhandene Wasser, das häufig als Trinkwasser genutzt wird, das Erfordernis gegeben, die Temperatur so niedrig wie möglich zu halten. Insbesondere um etwaige Belastungen mit Keimen, etwa Legionellen, zu vermeiden, wird typischerweise eine Wassertemperatur in dem Wasserversorgungsnetz von höchstens 25 °C gefordert. Vor allem aufgrund immer höherer Temperaturen während der Sommermonate steigt die Gefahr, dass diese Voraussetzung nicht mehr ohne Weiteres eingehalten werden kann. Überdies werden in letzter Zeit, insbesondere aus Kostengründen, Wasserleitungen des Wasserversorgungsnetzes nahe der Bodenoberfläche verlegt. So ist typischerweise auch in den Wintermonaten mit durchschnittlich höheren Temperaturen zu rechnen, sodass Wasserleitungen aufgrund der geringer werdenden Gefahr einer Vereisung häufig nur noch in eine Tiefe von 0,8 - 1,0 m verlegt werden und nicht, wie früher typischerweise üblich, in eine Tiefe von mindestens 2,0 m. Auch dieser Umstand steigert die Gefahr, dass die erforderliche Maximaltemperatur des Wassers in dem Wasserversorgungsnetz aufgrund entsprechend hoher Umgebungstemperaturen nicht eingehalten werden kann. Vor diesem Hintergrund besteht das Bedürfnis, eine möglichst lückenlose Überwachung der Temperatur in dem Wasserversorgungsnetz durchführen zu können.

Die vorliegende Erfindung stellt sich die Aufgabe, ein verbessertes Konzept bezüglich der Bestimmung und Überwachung der Temperatur des in einem Wasserversorgungsnetz vorhandenen Wassers anzugeben.

Erfindungsgemäß gelöst wird die Aufgabe bei einem Verfahren der eingangs genannten Art dadurch, dass mittels eines Mengenerfassungsmittels des Wasserzählers wenigstens eine Mengeninformation erfasst wird, die eine Menge des über die Anschlussvorrichtung zu der Verbrauchsstelle gelangenden Wassers betrifft, wobei mittels eines Temperaturerfassungsmittels wenigstens eine Temperaturinformation erfasst wird, die eine Temperatur des sich im Bereich des Wasserzählers befindenden Wassers betrifft, wobei die Erfüllung einer Speicherbedingung überprüft wird, die erfüllt oder nur dann erfüllbar ist, wenn sich aus der Mengeninformation oder wenigstens einer der Mengeninformationen ergibt, dass eine Temperatur des sich im Bereich des Wasserzählers befindenden Wassers der Temperatur des in dem Wasserversorgungsnetz vorhandenen Wassers entspricht, wobei bei der Erfüllung der Speicherbedingung die wenigstens eine, aktuell erfasste Temperaturinformation auf einem Datenspeicher abgespeichert und/oder zur Bestimmung der Temperatur des in dem Wasserversorgungsnetz vorhandenen Wassers verwendet wird.

So wird bei der vorliegenden Erfindung insbesondere das Problem überwunden, dass das im Bereich des Wasserzählers vorhandene Wasser eine Temperatur aufweist, die von der Temperatur des in dem Wasserversorgungsnetz vorhandenen Wassers abweicht, sodass die Temperatur dieses Wasser grundsätzlich nicht zur Bestimmung der Temperatur in dem Wasserversorgungsnetz geeignet ist. So sind Wasserzähler typischerweise im Inneren von einem Gebäude verortet. Folglich entspricht die Temperatur des im Bereich des Wasserzählers respektive innerhalb des Wasserzählers vorhandenen Wassers, sofern über die Anschlussvorrichtung aktuell kein Wasser aus dem Wasserversorgungsnetz entnommen wird oder unmittelbar zuvor entnommen wurde, der Temperatur, die auch in der Umgebung des Wasserzählers und mithin in dem Gebäude vorliegt. Folglich entspricht die Temperatur des in dem Wasserzähler vorhandenen Wassers nur zu denjenigen Zeitpunkten der Temperatur des in dem Wasserversorgungsnetz vorhandenen Wassers, wenn sich das in dem Wasserzähler vorhandene Wasser unmittelbar zuvor noch im Bereich des Wasserversorgungsnetzes befand. Ansonsten gleicht sich die Temperatur des in dem Wasserzähler vorhandenen Wassers gemäß dem Newton'schen Abkühlungsgesetz im Laufe der Zeit der in der Umgebung des Wasserzählers vorherrschenden Temperatur an, sodass dieses grundsätzlich beziehungsweise auf den ersten Blick für die Bestimmung der Temperatur des in dem Wasserversorgungsnetz vorhandenen Wassers nicht geeignet ist.

Um diese Problematik zu überwinden respektive zu umgehen, ist erfindungsgemäß die Überprüfung der Speicherbedingung vorgesehen, die nur dann erfüllt ist, wenn sich aus der Mengeninformation ergibt respektive diese impliziert, dass das aktuell im Wasserzähler vorhandene Wasser unmittelbar zuvor noch in dem Wasserversorgungsnetz vorhanden war und mithin eine Temperatur aufweist, die der dortigen Temperatur entspricht oder nur unwesentlich hiervon abweicht. So gibt die Mengeninformation insbesondere einen Wert an, etwa in Kubikmetern, der die Menge respektive die Masse oder das Volumen des Wassers angibt, das aktuell durch den Wasserzähler strömt oder das während einer unmittelbar vor dem aktuellen Zeitpunkt liegenden Messspanne geströmt ist. Ist diese Durchflussmenge hinreichend hoch, dann kann davon ausgegangen werden, dass die Temperatur des in dem Fluidzähler aktuell vorhandenen Wassers der Temperatur des in dem Wasserversorgungsnetz vorhandenen Wassers entspricht, sodass der Wert für die wenigstens eine aktuell erfasste Temperaturinformation als ein diesbezüglicher Messwert genutzt werden kann. Die Mengeninformation, die bisher typischerweise ausschließlich im Zusammenhang für Abrechnungszwecke erfasst wurde, wird mithin im Rahmen der vorliegenden Erfindung zusätzlich dazu verwendet, eine zuverlässige Bestimmung der Temperatur des Wassers im Wasserversorgungsnetz durchzuführen.

Unter dem Wasserversorgungsnetz sind diejenigen Komponenten, insbesondere Wasserleitungen, zu verstehen, über die das Wasser von dem Anbieter zum jeweiligen Verbraucher, also zur jeweiligen Anschlussvorrichtung, die in der Praxis häufig kurz als Hausanschluss respektive Anschluss bezeichnet wird, gelangt. Die Wasserleitungen sind typischerweise unterirdisch verlegt und weisen Abzweigungen auf, über die das Wasser zur jeweiligen Anschlussvorrichtung gelangt.

Der Wasserzähler weist bevorzugt einen Ein- und einen Ausgang aus, wobei das Wasser seitens des Wasserversorgungsnetzes über den Eingang in eine Messkammer respektive -strecke des Wasserzählers gelangt, wobei das Wasser seitens der Verbrauchsstelle über den Ausgang aus dem Wasserzähler ausströmt. An dem Ein- und/oder dem Ausgang kann ein Verbindungsmittel, insbesondere ein Verbindungsflansch, vorgesehen sein, über die der Wasserzähler mit der Wasserleitung des Wasserversorgungsnetzes beziehungsweise einer Leitung der Anschlussvorrichtung verbunden oder verbindbar ist.

Zur Erfassung der wenigstens einen Mengeninformation weist der Wasserzähler das wenigstens eine Mengenerfassungsmittel auf, über das die Erfassung dieser Information messtechnisch erfolgt. So kann der Wasserzähler diesbezüglich exemplarisch als ein Flügelradwasserzähler mit einem in Abhängigkeit der Durchflussrate rotierenden Flügelrad oder als ein Volumenzähler mit festen oder beweglichen Messkammertrennwänden oder als ein Ultraschallzähler mit einer Einheit zur Generierung von in das Wasser emittierten Ultraschallstrahlen, anhand derer die Mengeninformation ermittelt wird, ausgebildet sein.

Zur Erfassung der wenigstens einen Temperaturinformation ist das wenigstens eine Temperaturerfassungsmittel vorgesehen, das insbesondere eine Komponente des Wasserzählers ist. So kann das Temperaturerfassungsmittel in die Messkammer einragen beziehungsweise zumindest abschnittsweise in dieser angeordnet sein. Mittels des Temperaturerfassungsmittels, das auch als eine Thermometereinheit bezeichnet werden kann, ist etwa die von der Temperatur abhängende elektrische Leitfähigkeit eines Messelements des Temperaturerfassungsmittels oder eine hiervon abhängende Größe bestimmbar. Da das Messelement mit dem Wasser in thermischem Kontakt steht, ist anhand des entsprechenden Messwertes wiederum die Temperaturinformation ermittelbar.

Mit dem Abspeichern der wenigstens einen Temperaturinformation auf dem Datenspeicher erfolgt die Sicherung des Messwertes respektive der Information, mittels dem respektive der die Temperatur des in dem Wasserversorgungsnetz vorhandenen Wassers bestimmbar ist. Diese Information kann sodann zu einem späteren Zeitpunkt ausgelesen werden. Der Datenspeicher kann eine Komponente einer Auswertungseinrichtung sein. Die Auswertungseinrichtung kann zur Durchführung des erfindungsgemäßen Verfahrens, insbesondere zumindest zur Überprüfung der Erfüllung der Speicherbedingung, eingerichtet sein.

Erfindungsgemäß kann vorgesehen sein, dass die Speicherbedingung erfüllt oder nur dann erfüllbar ist, wenn sich aus der Mengeninformation oder wenigstens einer der Mengeninformationen ergibt, dass eine innerhalb eines aktuellen Zeitintervalls den Wasserzähler durchströmte Wassermenge größer ist als ein vorgegebener Grenzwert. Der Grenzwert ist hinreichend groß, sodass das aktuell im Wasserzähler vorhandene Wasser mit großer, insbesondere mit an Sicherheit grenzender, Wahrscheinlichkeit eine Temperatur aufweist, die zumindest im Wesentlichen der Temperatur in dem Wasserversorgungsnetz entspricht. Konkret ist denkbar, dass der Grenzwert ein fest vorgegebener Wert ist. Der Grenzwert kann hierbei einer Wassermenge entsprechen, die größer ist als die Menge des im Bereich des Wasserzählers, insbesondere des in der Messkammer, oder des in der Anschlussvorrichtung vorhandenen Wassers. Die Speicherbedingung ist etwa dann erfüllt oder nur dann erfüllbar, wenn die Menge des seitens der Verbrauchsstelle gezapften Wassers, also des den Fluidzähler beziehungsweise die Anschlussvorrichtung, insbesondere während einer Zeitdauer, durchströmenden Wassers, den Grenzwert übertrifft.

Denkbar ist, dass die wenigstens eine Mengeninformation und/oder die wenigstens eine Temperaturinformation in vorgegebenen, insbesondere konstanten, zeitlichen Abständen erfasst wird. So kann vorgesehen sein, dass die Informationserfassung zyklisch in Abständen von wenigen, etwa zwei, Sekunden erfolgt. So kann die entsprechende Erfassung auch eine hinreichende Datenbasis für eine Auswertung bezüglich der bereits erwähnten Abrechnungszwecke darstellen. Bevorzugt erfolgt auch die Überprüfung der Speicherbedingung in den vorgegebenen zeitlichen Abständen, insbesondere zyklisch.

Denkbar ist, dass bei der Erfüllung der Speicherbedingung wenigstens eine gegebenenfalls bereits zuvor auf dem Datenspeicher abgespeicherte Temperaturinformation von der wenigstens einen aktuellen Temperaturinformation überschrieben wird. Bevorzugt ist jedoch vorgesehen, dass bei der Erfüllung der Speicherbedingung, sofern bereits zuvor die wenigstens eine Temperaturinformation, insbesondere aufgrund einer entsprechend zuvor eingetretenen Erfüllung der Speicherbedingung, auf dem Datenspeicher abgespeichert wurde, die wenigstens eine aktuelle Temperaturinformation zusätzlich abgespeichert wird. Hierbei wird eine Datenbasis, anhand der die Temperatur des Wassers in dem Wasserversorgungsnetz überprüfbar ist, verbessert. Gemäß dieser Ausführungsform bilden die abgespeicherten Werte für die Temperaturinformationen einen eine Zeitreihe darstellenden Datensatz, der auch als ein Historienspeicher beziehungsweise als ein Historiendatensatz bezeichnet werden kann.

Insbesondere um aus der Auswertung der zur Verfügung stehenden Daten ein möglichst robustes Ergebnis erhalten zu können, kann vorgesehen sein, dass zusätzlich zu der wenigstens einen aktuellen Temperaturinformation die wenigstens eine aktuelle Mengeninformation auf dem Datenspeicher abgespeichert wird. So kann etwa ein Ergebnis respektive Wert für die Temperatur des in dem Wasserversorgungsnetz vorhandenen Wassers bezüglich einer Messgenauigkeit mit der jeweiligen Mengeninformation verknüpft werden. So ist denkbar, dass ein für die wenigstens eine Temperaturinformation ein Messfehler angenommen wird, der umso größer ist, je geringer die jeweils zugehörige und anhand der jeweiligen Mengeninformation bestimmte Wassermenge ist. Auch ein gegebenenfalls vorhandener, systematischer Zusammenhang zwischen dem Wert, der die Temperatur des in dem Wasserversorgungsnetz vorhandenen Wassers betrifft, und der Wassermenge kann bei der entsprechenden Auswertung berücksichtigt werden. So kann eine diesbezüglich vorhandene systematische Abweichung als umso größer angenommen werden, je geringer der Wert für die zugehörige Wassermenge ist.

Bevorzugt ist erfindungsgemäß vorgesehen, dass die Anschlussvorrichtung, insbesondere der Wasserzähler, eine anschlussseitige Übertragungseinrichtung aufweist, über die eine Kommunikationsverbindung mit einer anwenderseitigen Übertragungseinrichtung, die insbesondere eine anbieterseitige Übertragungseinrichtung ist, herstellbar ist, wobei die wenigstens eine auf dem Datenspeicher abgespeicherte Temperaturinformation über die Kommunikationsverbindung im Zuge eines Auslesevorgangs von der Anschlussvorrichtung zu der anwenderseitigen Übertragungseinrichtung übertragen wird. So erfolgt ein Auslesen des Wasserzählers hinsichtlich entsprechender Verbrauchsdaten für genannte Abrechnungszwecke typischerweise in vorgegebenen Zeitintervallen, etwa monatlich. Hierbei werden zusätzlich die gespeicherten Temperaturinformationen übertragen und mithin zur weiteren Auswertung bereitgestellt. Als die Kommunikationsverbindung kann eine drahtlose Kommunikationsverbindung, etwa eine Funkverbindung, hergestellt werden. So sind oder umfassen die anschlussseitige Übertragungseinrichtung und die anwenderseitige Übertragungseinrichtung entsprechende Mittel, die als Sender respektive Empfänger fungieren. So kann die anwenderseitige Übertragungseinrichtung eine Komponente eines Auslesegeräts sein, das, sofern dieses in eine hinreichende Nähe zu der anschlussseitigen Übertragungseinrichtung gebracht wird, zum Abrufen oder Empfangen der jeweiligen Werte eingerichtet ist, die anschließend gespeichert und/oder ausgegeben werden können.

Denkbar ist, dass im Zuge des Auslesevorgangs zusätzlich zu der wenigstens einen Temperaturinformation die wenigstens eine Mengeninformation über die Kommunikationsverbindung von der Anschlussvorrichtung zu der anwenderseitigen Übertragungseinrichtung übertragen wird. Wie bereits erwähnt wurde, ist anhand der Mengeninformation beispielsweise ein Messfehler betreffend die jeweilige Temperaturinformation bestimmbar, sodass die zusätzliche Übertragung der Mengeninformation die diesbezügliche Verwendung der Mengeninformation erlaubt. Der bereitgestellte respektive abgerufene Datensatz umfasst mithin bevorzugt neben den Werten betreffend den jeweiligen Zeitpunkt und den diesbezüglich zugeordneten Temperaturinformationen insbesondere zudem Werte für die Mengeninformationen, die dem jeweiligen Zeitpunkt zugeordnet sind.

Weiterhin ist erfindungsgemäß denkbar, dass die Anschlussvorrichtung, insbesondere der Wasserzähler, eine Ausgabeeinrichtung aufweist, über die die abgespeicherte Temperaturinformation oder die abgespeicherten Temperaturinformationen, die auf dem Datenspeicher abgespeichert ist oder sind, ausgegeben wird oder werden. Die Ausgabeeinrichtung kann ein digitales Display sein oder umfassen, wobei auch analoge Ausgabemittel wie etwa Skalen mit Zeiger vorgesehen sein können. Im Rahmen dieser Ausführungsform wird es ermöglicht, aktuelle Werte bezüglich der wenigstens einen Temperaturinformation unmittelbar über die Ausgabeeinrichtung ablesen zu können, insbesondere wenn anstelle des Speicherns der aktuell erfassten Temperaturinformation lediglich die hieraus erfolgende Bestimmung der Temperatur des in dem Wasserversorgungsnetz vorhandenen Wassers vorgesehen ist.

Denkbar ist, dass die wenigstens eine Temperaturinformation auch im Kontext weiterer Zwecke respektive Auswertungen genutzt wird. So ist bevorzugt vorgesehen, dass die wenigstens eine Temperaturinformation zusätzlich im Rahmen einer einen Gesamtwasserverbrauch betreffenden Mengenmessung genutzt wird. So ist die aktuelle Temperatur des den Wasserzähler durchströmenden Wassers grundsätzlich eine Größe, die Werte beziehungsweise Ergebnisse bezüglich eines aktuellen Verbrauchs beeinflussen, insbesondere da das spezifische Gewicht, also die Masse pro Volumeneinheit, des Wassers von der Temperatur des Wassers abhängt.

Zudem oder alternativ ist denkbar, dass die wenigstens eine Temperaturinformation zusätzlich im Rahmen der Realisierung einer Frostschutzfunktion genutzt wird. So kann vorgesehen sein, dass, insbesondere mittels der Auswertungseinrichtung, die Erfüllung einer Frostbedingung überprüft wird, die nur dann erfüllt oder erfüllbar ist, wenn sich anhand der wenigstens einen Temperaturinformation ergibt, dass aktuell das im Bereich der Anschlussvorrichtung respektive dem Wasserzähler vorhandene Wasser eine Temperatur aufweist, bei der mit einer aktuellen oder bevorstehenden Eisbildung zu rechnen ist. Bei Erfüllung der Frostbedingung kann, insbesondere vermittels der Auswertungseinrichtung, eine auf die Beseitigung oder Reduzierung dieser Gefahr gerichtete Signalausgabe erfolgen. So kann die Signalausgabe eine, insbesondere akustische, Ausgabe eines Warnsignals an einen Nutzer bewirken, mittels dem dieser über diese Gefahr informiert wird. Zudem oder alternativ kann die Signalausgabe an eine Heizeinrichtung erfolgen, wobei in diesem Fall mittels der Heizeinrichtung die Temperatur des Wassers erhöht wird.

Die vorliegende Erfindung betrifft überdies eine Bestimmungseinrichtung zur Bestimmung der Temperatur des in einem Wasserversorgungsnetz vorhandenen Wassers, wobei das Wasserversorgungsnetz über eine von außen in ein Gebäude führende Anschlussvorrichtung mit einer in dem Gebäude angeordneten Verbrauchsstelle verbunden ist, wobei die Bestimmungseinrichtung einen ebenfalls in dem Gebäude angeordneten Wasserzähler der Anschlussvorrichtung aufweist oder als ein solcher ausgebildet ist. Erfindungsgemäß gelöst wird die Aufgabe der vorliegenden Erfindung bei einer solchen Bestimmungseinrichtung dadurch, dass mittels eines Mengenerfassungsmittels der Bestimmungseinrichtung wenigstens eine Mengeninformation erfassbar ist, die eine Menge des über die Anschlussvorrichtung zu der Verbrauchsstelle gelangenden Wassers betrifft, wobei mittels eines Temperaturerfassungsmittels der Bestimmungseinrichtung wenigstens eine Temperaturinformation erfassbar ist, die eine Temperatur des sich im Bereich des Wasserzählers befindenden Wassers betrifft, wobei eine Auswertungseinrichtung der Bestimmungseinrichtung dazu eingerichtet ist, die Erfüllung einer Speicherbedingung zu überprüfen, die erfüllt oder nur dann erfüllbar ist, wenn sich aus der Mengeninformation oder wenigstens einer der Mengeninformationen ergibt, dass eine Temperatur des sich im Bereich des Wasserzählers befindenden Wassers der Temperatur des in dem Wasserversorgungsnetz vorhandenen Wassers entspricht, wobei die Auswertungseinrichtung ferner dazu eingerichtet ist, bei der Erfüllung der Speicherbedingung Steuerbefehle zu generieren und auszugeben, die das Abspeichern der wenigstens einen, aktuell erfassten Temperaturinformation auf einem Datenspeicher bewirken. Die Bestimmungseinrichtung ist bevorzugt die Anschlussvorrichtung oder der Wasserzähler. Alle im Zusammenhang mit dem erfindungsgemäßen Verfahren erläuterten Vorteile, Merkmale und Aspekte sind gleichermaßen auf die erfindungsgemäße Bestimmungseinrichtung übertragbar und umgekehrt.

Weitere Vorteile, Merkmale und Aspekte der vorliegenden Erfindung ergeben sich anhand der nachfolgend erläuterten Ausführungsbeispiele sowie der Figuren. Diese zeigen schematisch:
- Fig. 1:: Eine schematische Darstellung einer erfindungsgemäßen Bestimmungseinrichtung gemäß einem Ausführungsbeispiel, ausgebildet als eine Anschlusseinrichtung respektive als ein Wasserzähler,
- Fig. 2:: eine detaillierte, schematische Darstellung des Wasserzählers der Fig. 1,
- Fig. 3:: ein Flussdiagramm eines erfindungsgemäßen Verfahrens gemäß einem Ausführungsbeispiel, das anhand der Bestimmungseinrichtung der Figuren 1 und 2 durchgeführt wird, und
- Fig. 4:: ein Diagramm zur Darstellung eines Datensatzes, der bei der Durchführung des anhand der Fig. 3 erläuterten Verfahrens erhoben wird.

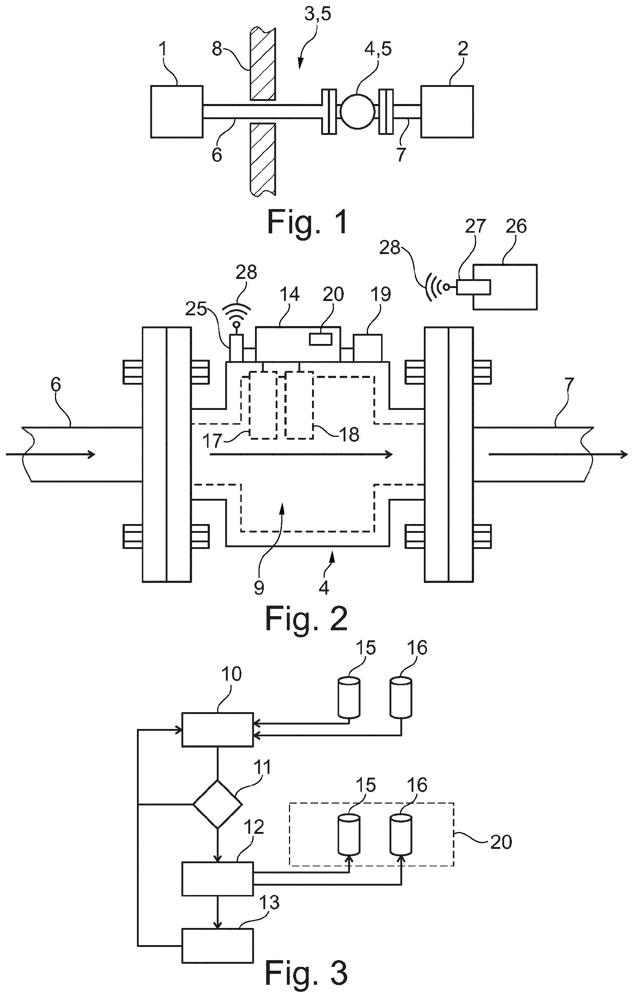

Fig. 1 zeigt eine schematische Prinzipdarstellung einer ein Wasserversorgungsnetz 1 mit einer Verbrauchsstelle 2 verbindenden Anschlussvorrichtung 3, die einen Wasserzähler 4 umfasst. Sowohl die Anschlussvorrichtung 3 als auch der Wasserzähler 4 realisiert jeweils eine erfindungsgemäße Bestimmungseinrichtung 5 gemäß einem Ausführungsbeispiel, da der Wasserzähler 4 und mithin auch die Anschlussvorrichtung 3, die mitunter den Wasserzähler 4 umfasst, alle für die vorliegende Erfindung wesentlichen Merkmale aufweisen. Das Wasserversorgungsnetz 1 ist über Leitungen 6, 7 der Anschlussvorrichtung 3 sowie dem Wasserzähler 4 mit der Verbrauchsstelle 2 verbunden. Die das Wasserversorgungsnetz 1 mit dem Wasserzähler 4 verbindende Leitung 6 verläuft durch eine Außenwand 8 eines Gebäudes. Weitere Komponenten der Anschlussvorrichtung 3, etwa eine an dem Wasserversorgungsnetz 1 vorgesehene Einbaugarnitur sowie Absperrhähne und dergleichen, sind aus Gründen der Übersichtlichkeit in der Fig. 1 nicht gezeigt. Fig. 2 zeigt Details des Wasserzählers 4, wobei die Strömungsrichtung des von dem Wasserversorgungsnetz 1 entnommenen und hierbei der Verbrauchsstelle 2 zugeführten Wassers durch Pfeile angedeutet ist. Eine Menge des aus dem Wasserversorgungsnetz 1 zur Verbrauchsstelle 2 entnommenen Wassers wird mittels des Wasserzählers 4 bestimmt, wobei dieses Wasser zu diesem Zweck eine Messkammer 9 durchströmt.

Die vorliegende Erfindung betrifft die mittels der Bestimmungseinrichtung 5 durchzuführende Bestimmung einer Temperatur des im Bereich des Wasserversorgungsnetzes 1 vorhanden Wassers. Hierbei tritt das Problem auf, dass sich das in der Bestimmungseinrichtung 5 befindende Wasser, mittels dem diese Temperaturbestimmung durchgeführt wird, in dem Gebäude verortet ist. Konkret ist hierzu das sich in der Messkammer 9 befindende Wasser vorgesehen. Demgegenüber befindet sich das Wasserversorgungsnetz 1 außerhalb des Gebäudes, sodass das dort vorhandene Wasser typischerweise eine niedrigere Temperatur aufweist als das sich in der Messkammer 9 befindende Wasser. Dieser die Messung der Temperatur des Wassers in dem Wasserversorgungsnetz 1 mittels Komponenten der Bestimmungseinrichtung 5 respektive des Wasserzählers 4 verkomplizierende Umstand und die hieraus resultierenden Probleme wird respektive werden im Rahmen der vorliegenden Erfindung überwunden.

Unter zusätzlicher Bezugnahme auf die Figuren 1 und 2 wird nachfolgend anhand der Fig. 3 ein erfindungsgemäßes Verfahren gemäß einem Ausführungsbeispiel erläutert, wobei Fig. 3 ein diesbezügliches Flussdiagramm zeigt. Dieses Verfahren umfasst die Schritte 10 bis 13, wobei zur Durchführung dieser Schritte, sofern gemäß dem nachfolgend Erläuterten nicht hiervon abweichend, eine Auswertungseinrichtung 14 des Wasserzählers 4 ausgebildet und eingerichtet ist. Die Auswertungseinrichtung 14 kann auch eine bezüglich des Wasserzählers 4 separate Komponente der Anschlussvorrichtung 3 sein, wobei in diesem Fall nur die Anschlussvorrichtung 3, nicht jedoch der Wasserzähler 4 die erfindungsgemäße Bestimmungsvorrichtung 5 bildet.

Im ersten Schritt 10 werden mittels eines Mengenerfassungsmittels 17 eine Mengeninformation 15 und mittels eines Temperaturerfassungsmittels 18 eine Temperaturinformation 16 erfasst. Die mit der Auswertungseinrichtung 14 verbundenen Erfassungsmittel 17, 18 sind jeweils ein Teil des Wasserzählers 4. Die Erfassungsmittel 17, 18 erfassen zu diesem Zweck die jeweilige Information 15, 16 betreffende Messwerte, die an die Auswertungseinrichtung 14 ausgegeben werden. Die Erfassung der Informationen 15, 16 erfolgt bevorzugt zyklisch, beispielsweise in Zeitschritten von zwei Sekunden.

Mittels des Mengenerfassungsmittels 17 wird die Mengeninformation 15 ermittelt. Das Mengenerfassungsmittel 17 ist ein messtechnisches Mittel, mittels dem entsprechende Messsignale ausgebbar sind, die zur Auswertung an die Auswertungseinrichtung 14 ausgegeben werden. So kann der Wasserzähler 4 als ein Flügelradwasserzähler mit einem in Abhängigkeit der Durchflussrate rotierenden Flügelrad, als ein Volumenzähler mit festen oder beweglichen Messkammertrennwänden, oder als ein Ultraschallzähler mit einer Einheit zur Generierung von in das Wasser emittierten Ultraschallstrahlen ausgebildet sein, wobei Details bezüglich des Mengenerfassungsmittels 17 der Fachperson hinlänglich bekannt sind und mithin an dieser Stelle nicht im Detail erläutert werden sollen. Konkret ist die Mengeninformation 15 auf eine Durchflussrate respektive - menge des Wassers durch die Messkammer 9 gerichtet und gibt die Menge respektive das Volumen des Wassers an, dass die Messkammer 9 im aktuellen und zwei Sekunden langen Messintervall durchströmt hat. Seitens der Auswertungseinrichtung 14 wird die Mengeninformation 15 auch für Abrechnungszwecke verarbeitet. So wird insbesondere die Gesamtmenge des während eines aktuellen Auslesezyklus gezapften Wassers bestimmt, die über eine als ein Display ausgebildete Ausgabeeinrichtung 19 des Wasserzählers 4 angezeigt respektive ausgegeben und in einem Datenspeicher 20 der Auswertungseinrichtung 14 für ein späteres Auslesen der entsprechenden Verbrauchsdaten abgespeichert wird.

Mittels des Temperaturerfassungsmittels 18 wird die Temperaturinformation 16 ermittelt. Das Temperaturerfassungsmittel 18 ist ein messtechnisches Mittel, mittels dem entsprechende Messsignale ausgebbar sind, die zur Auswertung an die Auswertungseinrichtung 14 ausgegeben werden. Das Temperaturerfassungsmittel 18 realisiert eine Thermometereinheit, die in die Messkammer 9 einragt. Der in die Messkammer 9 einragende Teil des Temperaturerfassungsmittels umfasst ein Messelement, dessen elektrische Leitfähigkeit von der Temperatur des in der Messkammer 9 angeordneten und mithin mit dem Messelement thermischem Kontakt stehenden Wassers abhängt. Hierzu werden von der Leitfähigkeit abhängende Messsignale generiert und an die Auswertungseinrichtung 19 ausgegeben, wobei die Auswertungseinrichtung 19 mittels dieser Messsignale wiederum die Temperatur des Wassers in der Messkammer 9 bestimmt, die die jeweilige Temperaturinformation 16 darstellt. Konkret gibt die Temperaturinformation 16 die Temperatur des sich aktuell in der Messkammer 9 befindenden Wassers in °C an. Die Erfassung der Temperaturinformation 16 erfolgt, gleichermaßen wie die Erfassung der Mengeninformation 15, zyklisch mit einem zeitlichen Abstand von zwei Sekunden.

Im zweiten Schritt 11 des Verfahrens wird mittels der Auswertungseinrichtung 14 die Erfüllung einer Speicherbedingung überprüft, die von der Mengeninformation 15 abhängt. Die Speicherbedingung ist dann erfüllt, wenn sich aus der Mengeninformation 15 ergibt, dass die Temperatur des sich im Bereich der Bestimmungseinrichtung 5 befindenden Wassers, also des mit dem Temperaturerfassungsmittel 18 in Kontakt stehenden und sich mithin innerhalb der Messkammer 9 befindenden Wassers, zumindest im Wesentlichen der Temperatur des sich in dem Wasserversorgungsnetz 1 befindenden Wassers entspricht.

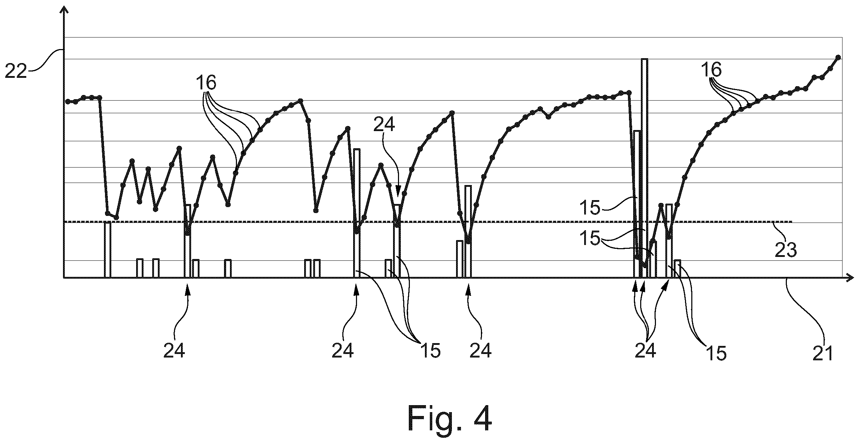

Konkret ist die Speicherbedingung erfüllt, wenn sich aus der Mengeninformation 15 ergibt, dass eine innerhalb eines aktuellen Zeitintervalls, das beispielhaft dem Messintervall von zwei Sekunden entspricht, die Anschlussvorrichtung 3 respektive den Wasserzähler 4 durchströmte Wassermenge größer ist als ein vorgegebener, fester Grenzwert 23 (siehe Fig. 4). Der Grenzwert 23 ist hinreichend groß, sodass das sich in der Messkammer 9 befindende Wasser zumindest im Wesentlichen die selbe Temperatur aufweist wie das sich in dem Wasserversorgungsnetz 1 befindenden Wasser, da sich das in der Messkammer 9 befindende Wasser aufgrund des Durchflusses des Wassers durch die Anschlussvorrichtung 3 zeitlich unmittelbar zuvor noch in dem Wasserversorgungsnetz 1 befunden hat und keine nennenswerte Erwärmung erfolgen konnte. Konkret wird als Grenzwert 23 ein Wert gewählt, der wenigstens der Wassermenge entspricht, die in dem Wasserzähler 4 beziehungsweise der Messkammer 9 sowie in den stromaufwärts vor dem Wasserzähler 4 angeordneten Komponenten der Anschlussvorrichtung 3 vorhanden ist. Der Grenzwert entspricht beim vorliegenden Ausführungsbeispiel mithin exemplarisch der Wassermenge des sich in der Leitung 6 und einer in den Figuren nicht gezeigten Anschlusskomponente, mit der die Anschlussvorrichtung 3 an dem Wasserversorgungsnetz 1 angeschlossen ist, vorhandenen Wassers oder hängt von dieser Wassermenge ab. Beispielhaft beträgt der Grenzwert 23 vorliegend das Doppelte dieser Wassermenge.

Zum besseren Verständnis der Speicherbedingung wird auf Fig. 4 verwiesen, die ein Koordinatensystem mit möglichen, beispielhaften Datenpunkten beziehungsweise Werten für die Informationen 15, 16 zeigt. Die Abszissenachse 21 betrifft die Zeit und die Ordinatenachse 22 die Werte der Informationen 15, 16. Die Werte für die Mengeninformation 15 sind als ein Balkendiagramm dargestellt. Die Werte für die Temperaturinformation 16 sind als ein Punktdiagramm dargestellt, bei dem die Punkte mittels Linien verbunden sind. Weiterhin ist der für die Erfüllung der Speicherbedingung maßgebliche Grenzwert 23 als eine horizontale Linie eingezeichnet.

Aus der in der Fig. 4 gezeigten Grafik wird zudem auch der Zusammenhang zwischen der Mengeninformation 15 und der Temperaturinformation 16 ersichtlich. Ausgehend von der Ordinatenachse 22 nach rechts ist bezüglich der ersten fünf Werte für die Temperaturinformation 16 erkennbar, dass diese im Wesentlichen konstant sind. Diese Temperatur entspricht der Temperatur des Raumes in dem Gebäude, in dem sich der Wasserzähler 4 befindet. Während dieser Zeit ergibt sich aus der Mengeninformation 15, dass seitens der Verbrauchsstelle 2 kein Wasser gezapft wird, was zu der Konstanz der Temperaturinformation 16 während dieser Zeit führt.

Erneut ausgehend von der Ordinatenachse 22 nach rechts wird zwischen dem fünften und sechsten Messpunkt betreffend die Temperaturinformation 16 seitens der Verbrauchsstelle 2 eine gewisse Menge an Wasser gezapft, die jedoch geringfügig kleiner ist als der Grenzwert 23. Obgleich zu diesem Zeitpunkt die Speicherbedingung nicht erfüllt ist, zeigt der Verlauf der Temperaturinformation 16 in diesem Bereich einen deutlichen Abfall der Temperatur des sich in der Messkammer 9 befindenden Wassers, da dieses aus dem Wasserversorgungsnetz 1, in dem die Temperatur des Wassers entsprechend gering ist, nachströmt. Anschließend erfolgt ein Anstieg der Temperatur des Wassers in der Messkammer 9 gemäß dem Newton'schen Abkühlungsgesetz, wobei erneutes Zapfen seitens der Verbrauchsstelle 2 zu weiteren Stellen respektive Zeitpunkten führt, an denen der Wert für die Temperaturinformation 16 absinkt. Bei dem, ausgehend von der Ordinatenachse 22 nach rechts gezählt, vierten Balken für die Mengeninformation 15 wird der Grenzwert 23 überschritten, was ein entsprechendes Absinken des Werte für die Temperaturinformation 16 bewirkt. Zu diesem Zeitpunkt 24 ist die Speicherbedingung erfüllt, sodass davon ausgegangen werden kann, dass der erfasste Wert für die Temperaturinformation 16 die in dem Wasserversorgungsnetz 1 vorliegende Temperatur widerspiegelt. In dem Diagramm sind alle acht Zeitpunkte 24, bei denen die Speicherbedingung erfüllt ist, entsprechend markiert.

Sofern die Speicherbedingung nicht erfüllt ist, wird das Verfahren im ersten Schritt 10 mit der erneuten Erfassung und mithin Aktualisierung der Informationen 15, 16 fortgesetzt. Sofern die Speicherbedingung erfüllt ist, dann werden im nächsten Schritt 12 die jeweils aktuell vorliegenden Informationen 15, 16 sowie der zugehörige Zeitpunkt auf dem Datenspeicher 20 der Auswertungseinrichtung 14 abgespeichert. Hierbei können grundsätzlich die zuletzt bei der Erfüllung der Speicherbedingung gespeicherten Werte überschrieben werden. Beim vorliegenden Ausführungsbeispiel ist jedoch ein derartiges Überschreiben nicht vorgesehen, sodass die auf dem Datenspeicher 20 abgespeicherten Werte für die Zeit sowie die Informationen 15, 16 einen eine Zeitreihe darstellenden Datensatz bilden. Diese Zeitreihe umfasst, betreffend die in Fig. 4 gezeigte Zeitdauer, mithin acht Datenpunkte, wobei jeder dieser Datenpunkte drei Werte aufweist, nämlich betreffend den jeweiligen Zeitpunkt, die zugehörige Mengeninformation 15 und die zugehörige Temperaturinformation 16.

Im nächsten Schritt 13 erfolgt ein zyklusmäßiger Auslesevorgang, bei dem der entsprechende Datensatz seitens des Anbieters ausgelesen respektive abgerufen wird. Diese Auslesevorgang erfolgt etwa monatlich, wobei der jeweils ausgelesene Datensatz hierbei von dem Datenspeicher 20 gelöscht wird (das Löschen ist jedoch nicht zwingend). Unter erneuter Bezugnahme auf die Fig. 2 umfasst der Wasserzähler 4 eine anschlussseitige Übertragungseinrichtung 25. Weiterhin erfolgt der Auslesevorgang dadurch, dass ein Auslesegerät 26 mit einer anwender- beziehungsweise anbieterseitigen Übertragungseinrichtung 27 in die Nähe des Wasserzählers 4 respektive der anschlussseitigen Übertragungseinrichtung 25 gebracht wird, wobei eine drahtlose Kommunikationsverbindung 28 zwischen der anschlussseitigen Übertragungseinrichtung 25 und der anbieterseitige Übertragungseinrichtung 27 gebildet wird. Über die Kommunikationsverbindung 28 wird der auf dem Datenspeicher 20 gespeicherte Datensatz betreffend die Zeit sowie die Informationen 15, 16 nebst den genannten Verbrauchsdaten übertragen.

Die im Rahmen des Schritts 13 übertragenen Daten hinsichtlich der Informationen 16, 17 sowie der jeweils zugehörigen Zeit werden im Zuge der Überprüfung des Einhaltens einer zulässigen Maximaltemperatur in dem Wasserversorgungsnetz 1 genutzt. Konkret wird überprüft, ob anhand der vorliegenden Temperaturinformationen 16 das Übersteigen einer zulässigen Maximaltemperatur des Wassers in dem Wasserversorgungsnetz 1 ersichtlich wird. In diesem Kontext fließen auch die zusätzlich zu den Temperaturinformationen 16 jeweils vorliegenden Mengeninformationen 15 mit ein. So wird insbesondere auch anhand der Fig. 4 deutlich, dass der Wert für die jeweilige Temperaturinformation 16 umso niedriger ist, je höher der Wert für die jeweils zugehörige Mengeninformation 15 ist. Dies liegt daran, dass sich der Wert für die Temperatur mit zunehmender Durchflussrate immer näher an die Temperatur in dem Wasserversorgungsnetz 1 angleicht. Dieses Verhalten entsteht insbesondere durch einen Hystereseeffekt, etwa da auch eine Temperatur des Gehäuses, die ebenfalls der Raumtemperatur entspricht, Einfluss auf die Temperatur des in der Messkammer 9 vorhandenen Wassers nimmt. Dieser Umstand kann etwa dadurch Berücksichtigung finden, dass die Werte bezüglich der Temperaturinformation 16 mit einem Fehler beaufschlagt werden, der umso höher ist, je geringer der Wert für die jeweils zugehörige Mengeninformation 15 ist. Alternativ kann auch, etwa basierend auf einem Modell, dieser systematische Einfluss mit in die Auswertung einbezogen werden.

Ergänzend wird darauf hingewiesen, dass die Erfassung der Temperaturinformation 16 vorliegend nicht nur für Zwecke der Überprüfung des Einhaltens einer zulässigen Maximaltemperatur in dem Wasserversorgungsnetz 1, sondern zusätzlich im Rahmen einer einen Gesamtwasserverbrauch betreffenden Mengenmessung genutzt wird, also im Kontext mit der Bestimmung der Verbrauchsdaten. So wird diesbezüglich die Kenntnis berücksichtigt, dass die aktuelle Temperatur des den Fluidzähler 4 durchströmenden Wassers Einfluss auf das spezifische Gewicht des Wassers nimmt und mithin im Rahmen der Bestimmung der Verbrauchsdaten zu berücksichtigen ist.

Überdies wird die Temperaturinformation 16 im Rahmen der Realisierung einer Frostschutzfunktion genutzt. So wird die aktuelle Temperaturinformation 16 nicht nur über die Ausgabeeinrichtung 19 für den Nutzer ausgegeben, sondern es erfolgt mittels der Auswertungseinrichtung 14 eine Überprüfung der Erfüllung einer Frostbedingung anhand der jeweils aktuellen Temperaturinformation 16. Die Frostbedingung ist erfüllt, wenn sich aus der jeweils aktuellen Temperaturinformation 16 ergibt, dass aufgrund entsprechend niedriger Temperaturen das aktuell in der Bestimmungseinrichtung 5 vorhandene Wasser einfrieren könnte. Im Falle der Erfüllung der Frostbedingung wird mittels der Auswertungseinrichtung 14 ein auf die Beseitigung oder Reduzierung dieser Gefahr gerichtetes Signal ausgegeben. Diese Signalausgabe bewirkt eine, beispielsweise akustische, Warnausgabe über die Ausgabeeinrichtung 19. Zudem oder alternativ kann das Signal an eine in den Figuren nicht näher gezeigte Heizeinrichtung der Bestimmungseinrichtung 5 beziehungsweise des Wasserzählers 4 ausgegeben werden, sodass mittels der Heizeinrichtung die Temperatur des Wassers erhöht wird.

Ergänzend wird nachfolgend eine mögliche, sich ebenfalls im Rahmen der vorliegenden Erfindung bewegende Abwandlung bezüglich des anhand der Fig. 3 erläuterten Verfahrens dargelegt. So ist denkbar, dass nach der Durchführung des Schritts 10, also nach der Erfassung der Informationen 15, 16, noch nicht die Überprüfung der Erfüllung der Speicherbedingung, sondern stattdessen das Abspeichern dieser Werte auf dem Datenspeicher 20 erfolgt. Der Schritt 11 wird mithin zunächst übersprungen, sodass der seitens des Datenspeichers 20 entstehende Datensatz nicht nur die bei der Erfüllung der Speicherbedingung vorliegenden Werte für die Informationen 15, 16 und die jeweils zugehörigen Zeitwerte umfasst, sondern sämtliche diesbezüglich erfassten Werte, und zwar unabhängig von der Erfüllung der Speicherbedingung. Der entstandene Datensatz wird sodann im Rahmen des Schritts 13 zum Auslesegerät 16 übertragen, wobei die Überprüfung der Speicherbedingung und das hiermit verbundene Ausfiltern der zur Überwachung der Temperatur in dem Wasserversorgungsnetz 1 unbrauchbaren Werte anschließend seitens des Anwenders respektive Anbieters erfolgt.

### Bezugszeichenliste

- 1: Wasserversorgungsnetz
- 2: Verbrauchsstelle
- 3: Anschlussvorrichtung
- 4: Wasserzähler
- 5: Bestimmungseinrichtung
- 6: Leitung
- 7: Leitung
- 8: Außenwand
- 9: Messkammer
- 10: Schritt
- 11: Schritt
- 12: Schritt
- 13: Schritt
- 14: Auswertungseinrichtung
- 15: Mengeninformation
- 16: Temperaturinformation
- 17: Erfassungsmittel
- 18: Erfassungsmittel
- 19: Ausgabeeinrichtung
- 20: Datenspeicher
- 21: Abszissenachse
- 22: Ordinatenachse
- 23: Grenzwert
- 24: Zeitpunkt
- 25: Übertragungseinrichtung
- 26: Auslesegerät
- 27: Übertragungseinrichtung
- 28: Kommunikationsverbindung

## Patentansprüche

1. Verfahren zur Bestimmung der Temperatur des in einem Wasserversorgungsnetz (1) vorhandenen Wassers, wobei das Wasserversorgungsnetz (1) über eine von außen in ein Gebäude führende Anschlussvorrichtung (3) mit einer in dem Gebäude angeordneten Verbrauchsstelle (2) verbunden ist, wobei die Anschlussvorrichtung (3) einen ebenfalls in dem Gebäude angeordneten Wasserzähler (4) aufweist, wobei mittels eines Mengenerfassungsmittels (17) des Wasserzählers (4) wenigstens eine Mengeninformation (15) erfasst wird, die eine Menge des über die Anschlussvorrichtung (3) zu der Verbrauchsstelle (2) gelangenden Wassers betrifft, wobei mittels eines Temperaturerfassungsmittels (18) wenigstens eine Temperaturinformation (16) erfasst wird, die eine Temperatur des sich im Bereich des Wasserzählers (4) befindenden Wassers betrifft, wobei die Erfüllung einer Speicherbedingung überprüft wird, die erfüllt oder nur dann erfüllbar ist, wenn sich aus der Mengeninformation (15) oder wenigstens einer der Mengeninformationen (15) ergibt, dass eine Temperatur des sich im Bereich des Wasserzählers (4) befindenden Wassers der Temperatur des in dem Wasserversorgungsnetz (1) vorhandenen Wassers entspricht, wobei bei der Erfüllung der Speicherbedingung die wenigstens eine, aktuell erfasste Temperaturinformation (16) auf einem Datenspeicher (20) abgespeichert und/oder zur Bestimmung der Temperatur des in dem Wasserversorgungsnetz (1) vorhandenen Wassers verwendet wird.

2. Verfahren nach Anspruch 1, **dadurch gekennzeichnet, dass** die Speicherbedingung erfüllt oder nur dann erfüllbar ist, wenn sich aus der Mengeninformation (15) oder wenigstens einer der Mengeninformationen (15) ergibt, dass eine innerhalb eines aktuellen Zeitintervalls den Wasserzähler (4) durchströmte Wassermenge größer ist als ein vorgegebener Grenzwert (23).

3. Verfahren nach Anspruch 1, **dadurch gekennzeichnet, dass** der Grenzwert (23) ein fest vorgegebener Wert ist.

4. Verfahren nach einem der vorangehenden Ansprüche, **dadurch gekennzeichnet, dass** die wenigstens eine Mengeninformation (15) und/oder die wenigstens eine Temperaturinformation (16) in vorgegebenen, insbesondere konstanten, zeitlichen Abständen erfasst wird.

5. Verfahren nach einem der vorangehenden Ansprüche, **dadurch gekennzeichnet, dass** bei der Erfüllung der Speicherbedingung, sofern bereits zuvor die wenigstens eine Temperaturinformation (16) auf dem Datenspeicher (20) abgespeichert wurde, die wenigstens eine aktuelle Temperaturinformation (16) zusätzlich abgespeichert wird.

6. Verfahren nach Anspruch 5, **dadurch gekennzeichnet, dass** zusätzlich zu der wenigstens einen aktuellen Temperaturinformation (16) die wenigstens eine aktuelle Mengeninformation (15) auf dem Datenspeicher (20) abgespeichert wird.

7. Verfahren nach einem der vorangehenden Ansprüche, **dadurch gekennzeichnet, dass** die Anschlussvorrichtung (3), insbesondere der Wasserzähler (4), eine anschlussseitige Übertragungseinrichtung (25) aufweist, über die eine Kommunikationsverbindung (28) mit einer anwenderseitigen Übertragungseinrichtung (27) herstellbar ist, wobei die wenigstens eine auf dem Datenspeicher (20) abgespeicherte Temperaturinformation (16) über die Kommunikationsverbindung (28) im Zuge eines Auslesevorgangs von der Anschlussvorrichtung (3) zu der anwenderseitigen Übertragungseinrichtung (27) übertragen wird.

8. Verfahren nach den Anspruch 6 und 7, **dadurch gekennzeichnet, dass** im Zuge des Auslesevorgangs zusätzlich zu der wenigstens einen Temperaturinformation (16) die wenigstens eine Mengeninformation (15) über die Kommunikationsverbindung (28) von der Anschlussvorrichtung (3) zu der anwenderseitigen Übertragungseinrichtung (27) übertragen wird.

9. Verfahren nach einem der Ansprüche 7 oder 8, **dadurch gekennzeichnet, dass** als die Kommunikationsverbindung (28) eine drahtlose Kommunikationsverbindung (28) hergestellt wird.

10. Verfahren nach einem der vorangehenden Ansprüche, **dadurch gekennzeichnet, dass** die Anschlussvorrichtung (3), insbesondere der Wasserzähler (4), eine Ausgabeeinrichtung (19) aufweist, über die die abgespeicherte Temperaturinformation (16) oder die abgespeicherten Temperaturinformationen (16), die auf dem Datenspeicher (20) abgespeichert ist oder sind, ausgegeben wird oder werden.

11. Verfahren nach einem der vorangehenden Ansprüche, **dadurch gekennzeichnet, dass** die wenigstens eine Temperaturinformation (16) zusätzlich im Rahmen einer einen Gesamtwasserverbrauch betreffenden Mengenmessung und/oder der Realisierung einer Frostschutzfunktion genutzt wird.

12. Bestimmungseinrichtung (5) zur Bestimmung der Temperatur des in einem Wasserversorgungsnetz (1) vorhandenen Wassers, wobei das Wasserversorgungsnetz (1) über eine von außen in ein Gebäude führende Anschlussvorrichtung (3) mit einer in dem Gebäude angeordneten Verbrauchsstelle (2) verbunden ist, wobei die Bestimmungseinrichtung (5) einen ebenfalls in dem Gebäude angeordneten Wasserzähler (4) der Anschlussvorrichtung (3) aufweist oder als ein solcher ausgebildet ist, wobei mittels eines Mengenerfassungsmittels (17) der Bestimmungseinrichtung (5) wenigstens eine Mengeninformation (15) erfassbar ist, die eine Menge des über die Anschlussvorrichtung (3) zu der Verbrauchsstelle (2) gelangenden Wassers betrifft, wobei mittels eines Temperaturerfassungsmittels (18) der Bestimmungseinrichtung (5) wenigstens eine Temperaturinformation (16) erfassbar ist, die eine Temperatur des sich im Bereich des Wasserzählers (4) befindenden Wassers betrifft, wobei eine Auswertungseinrichtung (14) der Bestimmungseinrichtung (5) dazu eingerichtet ist, die Erfüllung einer Speicherbedingung zu überprüfen, die erfüllt oder nur dann erfüllbar ist, wenn sich aus der Mengeninformation (15) oder wenigstens einer der Mengeninformationen (15) ergibt, dass eine Temperatur des sich im Bereich des Wasserzählers (4) befindenden Wassers der Temperatur des in dem Wasserversorgungsnetz (1) vorhandenen Wassers entspricht, wobei die Auswertungseinrichtung (14) ferner dazu eingerichtet ist, bei der Erfüllung der Speicherbedingung Steuerbefehle zu generieren und auszugeben, die das Abspeichern der wenigstens einen, aktuell erfassten Temperaturinformation (16) auf einem Datenspeicher (20) bewirken.
